# EUROPÄISCHE PATENTSCHRIFT

(11) **EP 0 874 751 B1**
(45) Veröffentlichungstag und Bekanntmachung des Hinweises auf die Patenterteilung: **02.11.2000**
(21) Anmeldenummer: 97900994.1
(22) Anmeldetag: 10.01.1997
(51) Int. Cl.: B62D 15/02

(54) **LENKWINKELSENSOR MIT UMDREHUNGSZÄHLWERK**
STEERING-ANGLE SENSOR WITH REVOLUTION COUNTER
CAPTEUR D'ANGLE DE BRAQUAGE POURVU D'UN COMPTE-TOURS

(30) Priorität: 20.01.1996 DE 19601965
(43) Veröffentlichungstag der Anmeldung: 04.11.1998
(73) Patentinhaber: ITT Automotive Europe GmbH, 60488 Frankfurt (DE)
(72) Erfinder: WEBER, Petra, D-74321 Bietigheim-Bissingen (DE); NECKEL, Klaus, D-71665 Vaihingen (DE); HÖHLER, Christian, D-71732 Tamm (DE); TRAUB, Harald, D-74211 Leingarten (DE)
(74) Vertreter: Dreiss, Fuhlendorf, Steimle & Becker
(86) Internationale Anmeldenummer: EP9700095
(87) Internationale Veröffentlichungsnummer: WO9726173

(56) Entgegenhaltungen:
- DE-A- 4 409 892
- DATABASE WPI Section EI, Week 8343 Derwent Publications Ltd., London, GB; Class S02, AN 83-800312 XP002029367 & SU 985 805 A (DULNEV V A) , 30.Dezember 1982

## Beschreibung

Die Erfindung betrifft einen Lenkwinkelsensor gemäß dem Oberbegriff des Anspruchs 1.

Ein derartiger Lenkwinkelsensor wird beispielsweise zur Gierwinkelregelung eines Kraftfahrzeugs benötigt. Bei derartigen Regeleinrichtungen ist es wichtig, daß diesen ein die Winkelstellung der Lenkräder beschreibender Wert zugeführt wird. Aus praktischen Erwägungen ist man aber dazu übergegangen, nicht den Lenkwinkel der Räder direkt zu messen, sondern den Drehwinkel des Lenkrades, der ja mit der Winkelstellung der Räder eng verknüpft ist. Hierzu sind beispielsweise Sensoren entwickelt worden, die mit einer sogenannten Codier-Scheibe arbeiten, welche kraftschlüssig mit dem Lenkrad gekoppelt ist. Eine derartige Einrichtung ist beispielsweise in der Patentanmeldung 195 32 903.1 der Anmelderin beschrieben worden. Um die gewünschte Winkelstellung der Räder feiner einstellen zu können und um den für den Lenkvorgang benötigten Kraftaufwand herabzusetzen, ist allerdings zwischen dem Lenkrad und den Fahrzeugrädern eine Übersetzung eingefügt, so daß mehrere Umdrehungen des Lenkrades notwendig sind, um die Fahrzeugräder um einen größeren Winkel zu verstellen.

Da die o.g. Codier-Scheibe mit dem Lenkrad gekoppelt ist, kann zwar die absolute Winkelstellung des Lenkrades angegeben werden, nicht aber wieviel Umdrehungen des Lenkrades bereits, ausgehend von einer neutralen Stellung der Fahrzeugräder, zurückgelegt wurden.

Um hier Abhilfe zu schaffen, wurde vorgeschlagen, während der Fahrt die Differenz der Drehgeschwindigkeiten der Vorderräder eines Fahrzeugs zu messen, durch welches sich eine Grobbestimmung der Winkelstellung der Vorderräder angeben läßt, so daß hieraus die Zahl der von dem Lenkrad ab einer Normalstellung bereits durchgeführten Umdrehungen sich rückwirkend bestimmen läßt. Zwar ist es denkbar, durch ständiges Addieren der Lenkradumdrehungen in der einen oder anderen Richtung ständig die Zahl der augenblicklich vorliegenden Lenkradumdrehungen zu verfolgen und somit entsprechende Informationen abzugeben. Für roderne Lenkwinkelsensoren, die, wie bei der oben beschriebeen Code-Scheibe, die Auswertung elektrisch bzw. elektronisch vornehmen, ist dies aber nicht möglich, da während des Parkens der Strom dieser Fahrzeuge abgestellt wird und gleichwohl im abgestellten Zustand ein Verdrehen der Räder möglich sein soll. In diesem Falle würde beim Wiedereinschalten des Stromes tatsächlich ein anderer Umdrehungswert vorliegen als der beim Abschalten der Stromversorgung gespeicherte. Hinzu kommt, daß bei sehr langsamen Geschwindigkeiten die Bestimmung der Umdrehungszahl aufgrund unterschiedlicher Drehgeschwindigkeiten der Vorderräder sehr ungenau wird.

Die DE 44 09 892 A1 offenbart einen Sensor zur Erfassung des Lenkwinkels eines Fahrzeugs, der eine Codescheibe aufweist, die von einer Anzahl von Aufnehmern abetastet wird und sich mit derselben Geschwindigkeit dreht wie das Lenkrad. Die SU 985 805 A offenbart einen mechanischen Zähler mit Zahlenwalzen oder -scheiben mit axial beweglichen Zahnvorsprüngen für Dekaden.

Die Erfindung geht daher aus von einem Lenkwinkelsensor der sich aus dem Oberbegriff des Anspruchs 1 ergebenden Gattung. Aufgabe der Erfindung ist es, bei einem derartigen Lenkwinkelsensor die Möglichkeit zu schaffen, auch dann die gerade bestehende Umdrehungszahl des Lenkrades präzise angeben zu können, wenn das Lenkrad bei abgeschalteter Versorgungsspannung verstellt und damit auch beim Starten des Fahrzeugs eine andere Umdrehungszahl vorliegt als beim Ausschalten der Versorgungsspannung.

Die Erfindung wird durch die sich aus dem kennzeichnenden Teil des Anspruchs 1 ergebende Merkmalskombination gelöst. Die Erfindung besteht im Prinzip also darin, ein zusätzliches Zählwerk einzuführen, welches eine die tatsächliche Umdrehungszahl des Lenkrades beschreibende Information abgibt. Dabei kann die Information durchaus auf elektrischem Wege abgegeben werden, da sie nur dann benötigt wird, wenn die Stromversorgung des Fahrzeugs eingeschaltet ist, denn nur in solchen Fällen ist eine Gierwinkelbestimmung zur Beseitigung der Schleudergefahr sinnvoll. Durch die mechanische Kopplung zwischen der Codier-Scheibe und dem Zählwerk wird allerdings sichergestellt, daß dieses auch dann vorbereitend auf den richtigen Wert eingestellt wird, wenn die Stromversorgung noch abgestellt ist. Das Zählwerk folgt also auch bei abgestellter Versorgungsspannung der Änderung des Lenkwinkels der Räder, gibt eine Information aber erst dann ab, wenn die Stromversorgung wieder eingeschaltet wird.

Zur Ausführung der Erfindung ist es notwendig, die Codier-Scheibe mechanisch mit dem Zählwerk zu koppeln. Danach kann beispielsweise eine Zahnraduntersetzung ähnlich wie bei einem Uhrwerk dafür sorgen, daß bei einer ganzen Umdrehung der Codier-Scheibe das Zählwerk um einen Schritt weiterschaltet. Das mechanische Getriebe kann aber auch darin bestehen, ein Schrittschaltwerk einzusetzen, welches um einen Schritt dann weiterschaltet, wenn die Codier-Scheibe eine ganze Umdrehung zurückgelegt hat. Dabei kann durch die Codier-Scheibe sowohl ein drehendes als auch sich axial verschiebendes Stellglied bewegt werden.

Als ein die Umdrehungen kennzeichnendes Ausgangssignal wird ein elektrisches Signal verwendet. Hier wird ein elektrische Signale abgebender Drehschalter durch ein mechanisches Getriebe angetrieben, welches durch ein Schrittschaltwerk gebildet ist.

Um die gerade anstehende Umdrehungszahl besonders einfach elektrisch auswerten zu können, empfiehlt sich in Weiterbildung der Erfindung die Merkmalskombination nach Anspruch 2. Danach wird in Abhängigkeit von der gerade anstehenden Umdrehungszahl einer von hinreichend vielen, die maximale Umdrehungszahl beschreibenden Kontakten mit einer Spannung beaufschlagt. Eine Spannung an einem bestimmten Kontakt gibt daher eine eindeutige Aussage auf die gerade vorliegende Umdrehungszahl. Eine besonders einfache Konstruktion hierzu zeigt die Weiterbildung der Erfindung nach Anspruch 3. Dabei ist jeder von der Nullstellung abweichenden Umdrehungszahl ein eigener Kontakt zugeordnet. Es ist somit möglich, durch eine Stromgabe an einen bestimmten Kontakt auf elektrischem Wege mitzuteilen, wieviel Umdrehungen des Lenkrades im Augenblick vorliegen. Dabei ist es so, daß die Umdrehungsrichtung des Lenkrades bestimmt, ob die nächsten Umdrehungszahlen dem errechneten Wert hinzuzufügen oder von diesem abzuziehen sind. Hat das Lenkrad also ausgehend von einer Nullstellung drei Umdrehungen im Uhrzeigersinn durchgeführt, so hat man die Umdrehungszahl 3 erreicht. Wird anschließend mit dem Lenkrad eine Umdrehung entgegen dem Uhrzeigersinn gemacht, so wird nicht eine Umdrehung hinzugefügt, sondern eine Umdrehung abgezogen und man hat dann nur noch die Umdrehungszahl 2. Analog verhält es sich bei einer Umdrehung des Lenkrades ausgehend von der Nullstellung entgegen dem Uhrzeigersinn.

Eine besonders einfache Ausgestaltung für den Drehschalter ergibt sich durch die Merkmalskombination nach Anspruch 4. Danach wird eine auf den als Schleifring ausgestalteten Kontaktring aufgebrachte Spannung in Abhängigkeit von der Umdrehungszahl auf eine der kreisförmig angeordneten Kontaktstücke gegeben. Hinsichtlich der Auswertung der die Umdrehungszahl beschreibenden elektrischen Signale kann dabei auch so vorgegangen werden, daß an jedes Kontaktstück ein anderer Widerstand angeschlossen ist und diese Widerstände zueinander parallel geschaltet werden. Ist der Innenwiderstand der Stromquelle groß genug oder verwendet man anstatt der einzelnen Widerstände jeweils einen Spannungsteiler, so kann die jeweils an den Widerständen anliegende Spannung als geltender Umdrehungswert ausgewertet werden. Als besonders einfach ausgestaltetes Schrittschaltwerk empfiehlt sich die Merkmalskombination nach Anspruch 5. Danach ist die Codier-Scheibe mit mindestens einem Schaltnocken verbunden, der das Schaltrad um eine entsprechende Anzahl von Zähnen des Schaltrades weiterschalten.

Will man erreichen, daß das Schaltrad so lange nicht gedreht werden kann, bis es durch einen oder zwei Schaltnocken auf der Codier-Scheibe angetrieben wird, so empfiehlt sich in Weiterbildung der Erfindung die Merkmalskombination nach Anspruch 6. Hierbei wird ein Umdrehen des Schaltrades dadurch verhindert, daß zwei eine Höhe a aufweisende Schaltzähne mit ihren Stirnflächen auf einem Kreis liegen, welcher sich mit dem Außenumfang der Codier-Scheibe überschneidet. Da die Zähne aufgrund ihrer großen Tiefe nicht weiterbewegt werden können, da sie andernfalls an den Umfang der Codier-Scheibe anstoßen, ist das Schaltrad blockiert. Zwischen den beiden Antriebszähnen liegt jeweils ein Antriebszahn mit niedrigerer Tiefe, der oberhalb der Deckfläche der Codier-Scheibe endet. Die Codier-Scheibe kann sich also unter diesen Schaltzahn drehen. Ein erster Schaltnocken auf der Codier-Scheibe nimmt den flachen Schaltzahn mit, wobei dem Schaltnocken auf der Codier-Scheibe eine Ausnehmung folgt, so daß auch der angrenzende tiefe Schaltzahn gedreht werden kann. Der nachfolgende flache Schaltzahn wird durch einen zweiten Schaltnocken mitgenommen und beim Herausdrehen des tiefen Schaltzahns der nachfolgende flache Schaltzahn über die Kontur der Codier-Scheibe gefahren. Danach ist der Ausgangszustand wieder erreicht mit dem Unterschied, daß das Schaltrad um zwei Schaltzähne weitergeschaltet wurde.

Um sicherzustellen, daß der Abstand der Drehachsen von Schaltrad und Codier-Scheibe dauerhaft und genau eingehalten wird, empfiehlt sich in Weiterbildung die Merkmalskombination nach Anspruch 7. Danach ist sowohl das Schaltrad als auch die Codier-Scheibe direkt im Gehäuse gelagert, so daß die Gehäusetoleranzen den Abstand der beiden zueinander parallelen Drehachsen von Schaltrad und Codier-Scheibe vorgeben.

Eine besonders sichere und einfache Lagerung für das Schaltrad erhält man durch die Merkmalskombination nach Anspruch 8. Dabei ist auch vorteilhaft, daß die Kontaktstücke ähnlich wie Leiterbahnen auf eine Leiterplatte aufgebracht sind.

Ein Ausführungsbeispiel der Erfindung wird nachfolgend anhand der Zeichnung erläutert. Darin zeigt
- Fig. 1: die in dem Gehäuse gelagerte Codier-Scheibe und

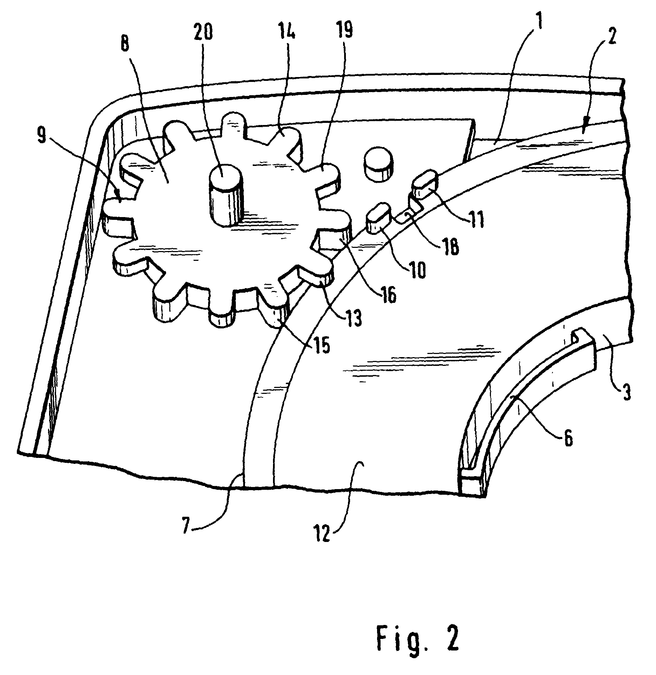

- Fig. 2: in einem Ausschnitt nach Fig. 1 den mechanischen Antrieb des Schaltrades.

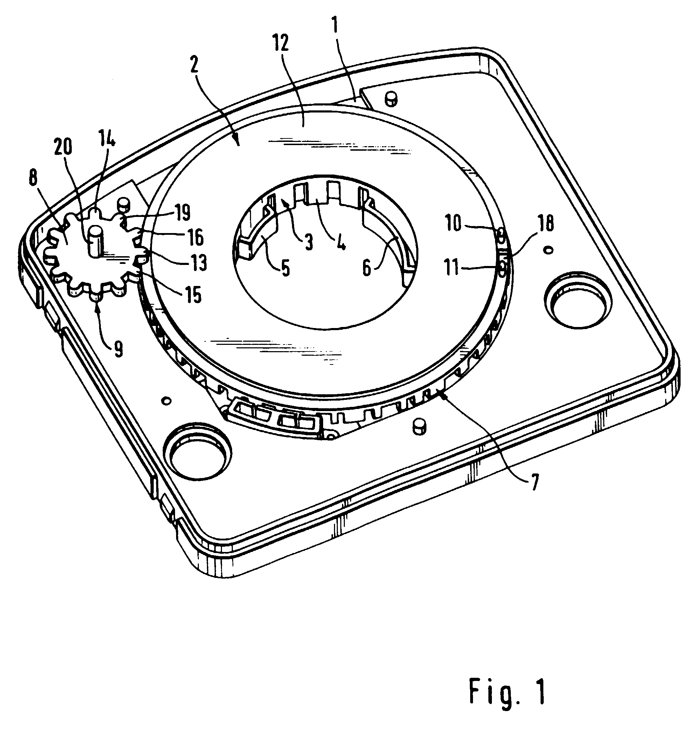

In Fig. 1 ist der Gehäuseboden 1 einer Gehäusekassette gezeigt, wobei der das Gehäuse verschließende Gehäusedeckel nicht dargestellt wurde.

In dem Gehäusedeckel 1 ist eine Codier-Scheibe drehbar gelagert. Die Arbeitsweise der Codier-Scheibe ist bereits in der Patentanmeldung 195 32 903.1 der Anmelderin beschrieben worden. Die Codier-Scheibe 2 hat eine innere Ringwand 3 und eine äußere Ringwand 7. Dabei sind in die innere Ringwand 3 Federarme 4 eingearbeitet, welche mit nicht dargestellten Rasthaken an der dem Betrachter abgewandten Unterseite des Gehäusebodens 1 rastend angreifen und so die Codier-Scheibe 2 an einer Bewegung aus der Betrachterebene heraus sichern. An der inneren Ringwand 3 sind weiterhin Transportösen 5,6 angeformt, über die Codier-Scheibe von dem Lenkrad indirekt angetrieben wird, so daß sich der Drehwinkel der Codier-Scheibe mit dem Drehwinkel des nicht dargestellten Lenkrads gegenüber dem fahrzeugfesten Gehäuseboden 1 ändert. Zur Bestimmung des Absolutwerts des Drehwinkels unabhängig von den vorausgegangenen Umdrehungen des Lenkrades dient eine Codierung auf einer Codespur in Form von sich parallel zur Drehachse der Codier-Scheibe erstreckenden rechteckförmigen Zähnen, die durch nicht dargestellte Detektoren abgetastet werden. Es ist daher möglich, die Winkelstellung der Codier-Scheibe innerhalb einer 360°-Umdrehung als Absolutwert zu bestimmen. Dabei ist allerdings nicht bekannt, wieviel Umdrehungen die Codier-Scheibe vor dem Einschalten der Stromversorgung gegenüber einer Mittelstellung bereits schon zurückgelegt hatte.

Hierzu dient ein Schaltrad 8 mit Schaltzähnen 9, welche durch zwei Schaltnocken 10,11 angetrieben werden. Im einfachsten Fall kann man sich das so vorstellen, daß einer der beiden. Schaltnocken 10,11 den oberhalb der Deckelfläche 12 der Codier-Scheibe 2 befindlichen Schaltzahn 13, welcher in die Kontur der Codier-Scheibe 2 ragt, um einen Schritt weiterschaltet.

Wie weiter oben schon geschildert wurde, ist es aber auch möglich, die aufeinanderfolgenden Zähne 13 und 16 an ihrer Stirnfläche unterschiedlich hoch zu machen, daß nur jeder zweite Schaltzahn entsprechend dem Schaltzahn 13 die Deckelfläche 12 der Codier-Scheibe überragt, während die beiden benachbarten Zähne 15,16 tiefer reichen, so daß sie an die äußere Ringwand 7 anstoßen und somit eine Drehung des Schaltrades 8 blockieren. Diese Blockade dauert so lang, bis der Schaltnocken 10 den flachen Schaltzahn 13 ergreift und ein Stück weiterdreht, so daß der tiefere Schaltzahn 16 dann in eine Ausnehmung 18 in der äußeren Ringwand 7 eingreifen kann. Die Ausnehmung 18 fördert dann auch den Schaltzahn 16 weiter, bis schließlich der flache Schaltzahn 19 über die Deckelfläche 12 gelangt, während die beiden benachbarten hohen Schaltzähne 16,14 das Schaltrad 8 festhalten.

Da das Schaltrad 8 im ganzen 12 Zähne besitzt und jeweils zwei Zähne in einem Schritt geschaltet werden, kann das Schaltrad insgesamt sechs Stellungen einnehmen, die den unterschiedlichen Umdrehungszahlen der Codier-Scheibe 2 zugeordnet sind.

Das Schaltrad selbst dient als Antrieb eines Drehschalters. Dabei kann in nicht dargestellter Form unterhalb des Zahnrades ein Schaltring liegen, um dessen Rand sechs isolierte kreissektorförmige Kontaktstücke gruppiert sind. An dem Schaltrad selbst ist dann ein bügelförmiges Kontaktstück montiert, welches den inneren Kontaktring mit einem der äußeren Kontaktstücke verbindet, wobei das jeweils kontaktierte Kontaktstück von der Winkellage des Schaltrades abhängt. Da die Kontaktstücke und der Kontaktring in eine Leiterplatte eingearbeitet sind, wird der Aufbau des Drehschalters sehr einfach. Die einzelnen Kontaktstücke gehen in Ausgangsleitungen auf der Leiterplatte über, während der innere Kontaktring mit einer Spannung versorgt wird. Auf diese Weise ist die Spannungsgabe an einem der Kontakte eine Information über die Drehlage des Schaltrades und damit die Umdrehungszahl der Codier-Scheibe. Die Auswertung der Drehinformation des Schaltrades kann dabei derart geschehen, daß die einzelnen Ausgänge der Kontaktstücke über Widerstände geführt sind, so daß die Spannung an den zueinander parallel geschalteten Ausgängen eine Aussage über die Umdrehungszahl der Codier-Scheibe machen kann.

Selbstverständlich sind im Rahmen der Erfindung auch andere Möglichkeiten denkbar, um die Umdrehungszahl der Codier-Scheibe festzulegen. Wichtig ist dabei insbesondere, daß die Übertragung der Drehbewegung der Codier-Scheibe auf das Schaltrad mechanisch geschieht, so daß selbst bei abgeschalteter Spannungsversorgung beim Verschwenken der Vorderräder auch die Codier-Scheibe und damit das Schaltrad angetrieben werden. Selbst in diesem Falle ist beim Einschalten der Stromversorgung des Fahrzeugs sofort erkennbar, welche Winkellage die Vorderräder einnehmen, so daß die Giermomentenregelung sofort richtig reagieren kann.

In Fig. 1 ist noch die Drehwelle 20 des Schaltrades 8 zu sehen, welche an ihrem für den Betrachter nicht sichtbaren unteren Ende in eine Lageröffnung in den Gehäuseboden 1 ragt, während das obere Ende von dem nicht gezeigten Gehäusedeckel aufgenommen wird.

## Patentansprüche

1. Lenkwinkelsensor mit einer drehbar gelagerten Codier-Scheibe (2), deren Drehwinkel dem Drehwinkel des Lenkrades entspricht und mit mindestens einem Detektor, dessen Eingang die mit der Codier-Scheibe (2) modulierte Größe zugeführt wird und dessen Ausgang dem Eingang einer Auswerteschaltung zugeführt wird, welche den Absolutwert des Lenkwinkels bestimmt, wobei die Codier-Scheibe (2) mit einem mechanisch gekoppelten, durch die Drehbewegung der Codier-Scheibe (2) angetriebenen Zählwerk (8) verbunden ist, dessen der Auswerteschaltung zugeführtes Ausgangssignal von der Anzahl der von der Codier-Scheibe (2) gegenüber einer Mittelstellung zurückgelegten vollen Umdrehungen abhängig ist und die Kopplung zwischen der Codier-Scheibe (2) und dem Zählwerk (8) durch ein mechanisches Getriebe (9-19) geschieht, dadurch **gekennzeichnet**, daß das Zählwerk (8) mechanisch arbeitet und, durch einen schrittweise geschalteten Drehschalter gebildet ist, wobei der Schalter nach jeder Umdrehung der Codier-Scheibe (2) in von der Umdrehungsrichtung der Codier-Scheibe abhängiger Schaltrichtung um einen Schritt auf das benachbarte Kontaktstück weiterschaltet.

2. Lenkwinkelsensor nach Anspruch 1, dadurch **gekennzeichnet**, daß das Ausgangssignal des Schalters die Anzahl der Umdrehungen der Codier-Scheibe (2) gegenüber einer Nullstellung durch die Durchschaltung der der Anzahl der Umdrehungen entsprechenden Ausgangsleitung zu einer Spannungsquelle anzeigt.

3. Lenkwinkelsensor nach Anspruch 1 oder 2, dadurch **gekennzeichnet**, daß das Zählwerk (8) durch eine der Zahl der schaltbaren Schritte entsprechende Zahl von gleichmäßigen, im Abstand zueinander auf einem Außenkreis angeordneten Kontaktstücken gebildet ist, denen die Ausgangsleitungen zugeordnet sind und an einem durchgehenden, innerhalb des Außenkreises konzentrisch liegenden Kontaktring die Spannungsquelle angeschlossen ist.

4. Lenkwinkelsensor nach Anspruch 3, dadurch **gekennzeichnet**, daß das Zählwerk (8) eine mit einem Schaltrad verbundene Kontaktbrücke aufweist, welche in Abhängigkeit von der Drehstellung des Zählwerkes (8) den Kontaktring mit einem der Kontaktstücke verbindet.

5. Lenkwinkelsensor nach Anspruch 4, dadurch **gekennzeichnet**, daß das Schaltrad mit Antriebszähnen (13 bis 19) versehen ist und die Codier-Scheibe (2) zwei nebeneinanderliegende Schaltnocken (10,11) aufweist, die das Schaltrad bei jeder Umdrehung der Codier-Scheibe (2) um zwei Zähne (13,16) weiterschalten.

6. Lenkwinkelsensor nach Anspruch 5, dadurch **gekennzeichnet**, daß zwischen den beiden Schaltnocken (10,11) eine Ausnehmung (18) eingefügt ist und die Antriebszähne (13 bis 19) in Axialrichtung abwechselnd unterschiedliche Höhen aufweisen, wobei die Schaltnocken (10,11) mit den Schaltzähnen (13 bis 19) derart zusammenwirken, daß die beiden Schaltnocken (10,11) zwei aufeinanderfolgende Schaltzähne (13,16) unterschiedlicher Höhe unmittelbar nacheinander weiterschalten.

7. Lenkwinkelsensor nach einem der Ansprüche 1 bis 6, dadurch **gekennzeichnet**, daß das Zählwerk (8) und die Codier-Scheibe (2) in einem gemeinsamen Gehäuseteil (1) drehbar im Abstand voneinander gelagert sind.

8. Lenkwinkelsensor nach einem der Ansprüche 3 bis 7, dadurch **gekennzeichnet**, daß die Kontaktstücke und der Kontaktring zusammen mit anderen elektrischen Bauelementen auf einer Leiterplatte angeordnet sind und die Drehachse (20) des Schaltrades in Lageröffnungen zweier Gehäuseteile (1) des Lenkwinkelsensors vorzugsweise drehbar gelagert sind.

## Claims

1. A steering angle sensor with a rotatably supported code disk (2) the angle of rotation of which corresponds to the angle of rotation of the steering wheel and with at least one detector the input of which is fed with the quantity modulated by the code disk (2) and the output of which is fed to the input of an evaluation circuit which determines the absolute value of the steering angle, wherein the code disk (2) is connected with a mechanically coupled counter (8) driven by the rotation of the code disk (2) whose output signal fed to the evaluation circuit depends on the number of full revolutions covered by the code disk relative to a central position and wherein the coupling between the code disk (2) and the counter (8) is realised by a mechanical gearing (9 - 19), characterised in that the counter (8) works mechanically and is formed by a rotary switch operated stepwise, with the switch, after any revolution of the code disk (2), indexing by one step to the neighbouring contact piece, following an indexing direction which depends on the direction of revolution of the code disk.

2. A steering angle sensor as claimed in claim 1, characterised in that the output signal of the switch indicates the number of the revolutions of the code disk (2) relative to a zero position by connecting the output line, corresponding to the number of revolutions, through to a voltage source.

3. A steering angle sensor as claimed in claim 1 or 2, characterised in that the rotary switch (8) is formed by a number of even contact pieces, which number corresponds to the number of indexable steps and which contact pieces are spaced relative to each other on an outside circle and are assigned the output lines, and in that the voltage source is connected to a through contact ring lying concentrically within the outside circle.

4. A steering angle sensor as claimed in claim 3, characterised in that the rotary switch (8) has a contact bridge connected with a ratchet wheel and connecting the contact ring with one of the contact pieces in dependence on the position of rotation of the ratchet wheel (8).

5. A steering angle sensor as claimed in claim 4, characterised in that the ratchet wheel is provided with driving teeth (13 through 19) and in that the code disk (2) has two trigger cams (10, 11) lying side by side and indexing the ratchet wheel (8) by two teeth (13, 16) to the next position upon any revolution of the code disk (2).

6. A steering angle sensor as claimed in claim 5, characterised in that a recess (18) is inserted between the two trigger cams (10, 11) and in that the driving teeth (13 through 19) axially have alternatingly different heights, with the trigger cams (10, 11) cooperating with the ratchet teeth (13 through 19) so that the two trigger cams (10, 11) index two consecutive ratchet teeth (13, 16) of different height to the next position, one tooth immediately after the other.

7. A steering angle sensor as claimed in any of claims 1 through 6, characterised in that the ratchet wheel (8) and the code disk (2) are rotatably supported in a common housing part (1) at a distance relative to each other.

8. A steering angle sensor as claimed in any of claims 3 through 7, characterised in that the contact pieces and the contact ring are arranged together with other electrical components on a circuit board and in that the shaft (20) of the ratchet wheel with preference is rotatably supported in supporting openings of two housing parts (1) of the steering angle sensor.

## Revendications

1. Capteur d'angle de braquage, comportant un disque codeur (2) monté de façon rotative, dont l'angle de rotation correspond à l'angle de rotation du volant de direction, et comportant au moins un détecteur dont l'entrée reçoit la grandeur modulée au moyen du disque codeur (2), et dont la sortie est acheminée à l'entrée d'un circuit d'analyse qui détermine la valeur absolue de l'angle de braquage, le disque codeur (2) étant relié à un mécanisme compteur (8) mécaniquement accouplé et mû par le mouvement de rotation du disque codeur (2), et dont le signal de sortie acheminé au circuit d'analyse dépend du nombre de tours complets parcourus par le disque codeur (2) par rapport à une position médiane, et le couplage entre le disque codeur (2) et le mécanisme compteur (8) étant effectué via un mécanisme de transmission mécanique (9 à 19),
caractérisé en ce que le mécanisme compteur (8) fonctionne de façon mécanique et est constitué par un contacteur rotatif pas-à-pas, le contacteur avançant d'un pas, jusque sur le segment de contact voisin, dans un sens d'avance qui dépend du sens de rotation du disque codeur, après chaque tour du disque codeur (2).

2. Capteur d'angle de braquage selon la revendication 1, caractérisé en ce que le signal de sortie du contacteur indique le nombre de tours du disque codeur (2) par rapport à une position zéro, grâce à la mise en communication du conducteur de sortie correspondant au nombre de tours, avec une source de tension.

3. Capteur d'angle de braquage selon la revendication 1 ou 2, caractérisé en ce que le mécanisme compteur (8) est constitué par un nombre de segments de contact correspondant au nombre de pas pouvant être parcourus, disposés régulièrement à une distance les uns des autres sur un cercle extérieur, et auxquels sont associés les conducteurs de sortie, et en ce qu'il est relié à la source de tension par une bague de contact continue située concentriquement à l'intérieur du cercle extérieur.

4. Capteur d'angle de braquage selon la revendication 3, caractérisé en ce que le mécanisme compteur (8) comporte un pont de contact relié à une roue de commande, qui relie la bague de contact à l'un des segments de contact en fonction de la position de rotation du mécanisme compteur (8).

5. Capteur d'angle de braquage selon la revendication 4, caractérisé en ce que la roue de commande est pourvue de dents d'entraînement (13 à 19), et que le disque codeur (2) comporte deux cames de commande juxtaposées (10, 11), qui amènent la roue de commande à avancer de deux dents (13, 16) à chaque tour du disque codeur (2).

6. Capteur d'angle de braquage selon la revendication 5, caractérisé en ce qu'un évidement (18) est inséré entre les deux cames de commande (10, 11), et en ce que les dents d'entraînement (13 à 19) présentent, dans le sens axial, des hauteurs différentes alternées, les cames de commande (10, 11) coopérant avec les dents de commande (13 à 19) de manière telle que les deux cames de commande (10, 11) provoquent l'avance de deux dents de commande successives (13, 16), de hauteurs différentes, directement l'une derrière l'autre.

7. Capteur d'angle de braquage selon l'une des revendications 1 à 6, caractérisé en ce que le mécanisme compteur (8) et le disque codeur (2) sont montés de façon rotative dans un élément de boîtier commun (1), à une distance l'un de l'autre.

8. Capteur d'angle de braquage selon l'une des revendications 3 à 7, caractérisé en ce que les segments de contact et la bague de contact sont disposés, avec d'autres composants électriques, sur une carte de circuit imprimé, et que l'axe de rotation (20) de la roue de commande est monté, de préférence de façon rotative, dans des ouvertures de palier de deux parties du boîtier (1) du capteur d'angle de braquage.
